# NEW EUROPEAN PATENT SPECIFICATION

(11) **EP 0 836 389 B2**
(45) Date of publication and mention of the opposition decision: **22.04.2015**
(45) Mention of the grant of the patent: 18.02.2004
(21) Application number: 95924776.8
(22) Date of filing: 05.07.1995
(51) Int. Cl.: A23G 4/08

(54) **SYRUPS FOR USE IN CHEWING GUM CONTAINING SORBITOL, A PLASTICIZING AGENT AND AN ANTICRYSTALLIZATION AGENT**
SIRUPS ZUR VERWENDUNG IN SORBITOL-ENTHALTENDEM KAUGUMMI, EIN WEICHMACHER UND EIN ANTIKRISTALLISATIONSMITTEL
SIROPS POUR GOMME A MACHER CONTENANT DU SORBITOL, UN PLASTIFIANT ET UN ANTICRISTALLISANT

(43) Date of publication of application: 22.04.1998
(73) Proprietor: WM. WRIGLEY JR. COMPANY, Chicago, Illinois 60611 (US)
(72) Inventor: REED, Michael, A., Merrillville, IN 46410 (US); GUDAS, Victor, V., Chicago, IL 60629 (US); MAZUREK, Pamela, M., Orland Park, IL 60462 (US); CHAPDELAINE, Albert, H., Naperville, IL 60540 (US); YATKA, Robert, J., Orland Park, IL 60462 (US); RICHEY, Lindell, C., Lake Zurich, IL 60047 (US); MEYERS, Marc, A., Sparta, NJ 07871 (US)
(74) Representative: Campbell, Neil Boyd
(86) International application number: PCT/US1995/008392
(87) International publication number: WO 1997/001962

(56) References cited:
- WO-A1-95/08924
- WO-A1-95/17829
- US-A- 3 857 965
- US-A- 3 857 965
- US-A- 4 382 962
- US-A- 4 382 962
- US-A- 4 671 961
- US-A- 4 671 961
- US-A- 4 671 967
- US-A- 4 671 967
- US-A- 4 728 515
- US-A- 4 728 515
- US-A- 5 120 551
- US-A- 5 120 551
- US-A- 5 120 551

## Description

### BACKGROUND OF THE INVENTION

The present invention relates generally to chewing gums. More specifically, the present invention relates to chewing gums including sorbitol.

It is known to provide alditols, such as sorbitol, mannitol, and xylitol in chewing gums. Alditols can be used in chewing gum, as well as other confectioneries and food products, as a "sugar substitute." These sugar substitutes have the advantage that they are not fermented in the mouth of the consumer to form products that can attack dental enamel. Therefore, sorbitol, as well as other alditols, is used in sugarless products. Additionally, sorbitol can be used as a bulking agent.

A number of patents have disclosed and discussed the use of various compositions including sorbitol. U.S. Patent No. 3,857,965 discloses a chewing gum composition made from melting crystalline sorbitol and mixing the melted sorbitol with gum base and a crystallization retardant. U.S. Patent No. 4,156,740 to Glass et al., U.S. Patent No. 4,250,196 to Friello, U.S. Patent No. 4,252,829 to Terrevazzi and U.S. Patent No. 4,466,983 to Cifrese et al. disclose liquid compositions containing sorbitol used as a centerfill for chewing gum. U.S. Patent No. 5,120,551 to Yatka et al. discloses a syrup containing sorbitol and other alditols used in chewing gum compositions.

Several patents disclose a syrup for use in chewing gum which is made by mixing glycerin or propylene glycol with an aqueous hydrogenated starch hydrolysate (HSH) such as Lycasin brand HSH from Roquette, including U.S. Patent Nos. 4,671,961; 4,671,967 and 4,728,515 to Patel et al. It is believed that Lycasin brand HSH contains, on a dry basis, about 6% sorbitol, about 52% maltitol and about 42% of oligosaccharides having a degree of polymerization ("DP") of 3 or greater.

Sorbitol can be provided in chewing gum in its crystalline form. It is believed that crystalline sorbitol currently accounts for approximately 50% of typical sugar-free chewing gum formulations. Unfortunately, crystalline sorbitol is costly. Although it would be desirable to have a replacement for crystalline sorbitol, heretofore, such possible replacements were not as effective, created product stability problems, created processability issues, were even more expensive than crystalline sorbitol, and/or could not be used with certain formulations.

In this regard, aqueous sorbitol has been explored for use in chewing gum. Sorbitol in an aqueous solution is a less expensive alternative, on a dry basis, than crystalline sorbitol. Unfortunately, the use of aqueous sorbitol in chewing gum at levels above 15% can create problems with respect to product stability. Likewise, the use of aqueous sorbitol at levels above 15% can also create processability problems. This is due, it is believed, to the water content contained in the aqueous sorbitol.

Additionally, there are problems with respect to at least certain chewing gum formulations when using sorbitol in an aqueous solution. Because typical aqueous sorbitol solutions contain about 30% water, the water added with the sorbitol is detrimental to moisture sensitive ingredients when sorbitol solution is provided at high levels in chewing gum. A further difficulty with aqueous sorbitol is that it readily crystallizes and causes the gum to become brittle. While Lycasin brand HSH contains a small amount of sorbitol, it does not provide a significant amount of sorbitol such that HSH can be substituted for crystalline sorbitol.

There is therefore a need for an improved method and/or sorbitol product that allows sorbitol to be added to a chewing gum formulation in a non-crystalline state.

### SUMMARY OF THE INVENTION

The present invention provides an improved chewing gum composition. More specifically, the present invention provides a chewing gum composition that includes an aqueous syrup containing sorbitol, a plasticizing agent and an anticrystallization agent. Additionally, the present invention also provides other products such as food stuffs, beverages, medicaments, and confectioneries that include the aqueous sorbitol syrup. Pursuant to the present invention, the sorbitol syrup can be used in formulations that contain levels of liquid sorbitol soultion that were heretofore not possible.

In one aspect, the invention is an aqueous syrup for use in a chewing gum comprising, on a dry basis, 50% to 85% alditols and 15% to 50% plasticizing agent selected from glycerin, propylene glycol and mixtures thereof. In the syrup, 60% to 92% of the alditols are sorbitol, and 8% to 40% are anticrystallization agents comprising alditols other than sorbitol with a degree of polymerization (DP) of 1 or 2 selected from the group consisting of maltitol or a blend of maltitol and mannitol. Any alditols present in the syrup with a DP of 3 or greater are present at a ratio to the alditols other than sorbitol with a DP of 1 or 2 of less than 2:3.

In a second aspect, the invention is a method for adding sorbitol to a product including other components comprising the steps of:
a) creating a solution that consists essentially of:
   i) 55 to 75% by weight aqueous sorbitol,
   ii) 25 to 45% by weight of a plasticizing agent selected from the group consisting of glycerin, propylene glycol and mixtures thereof, and
   iii) 3 to 7% by weight of an anticrystallization agent selected from the group consisting of maltitol or a blend of maltitol and mannitol;
b) coevaporating the solution into a syrup; and
c) adding the syrup to the other components.

An advantage of the present invention is that it provides an improved chewing gum formulation, particularly an improved sugarless chewing gum.

Further, an advantage of some embodiments of the invention is an improved method for adding sorbitol to chewing gum in a state other than a crystalline state.

Still further, an advantage of some embodiments of the invention is a more cost effective method of adding sorbitol to a chewing gum composition.

Another advantage of the preferred embodiment of the invention is that it allows greater levels of sorbitol to be added to the chewing gum in a non-crystalline form than heretofore practical from a commercial standpoint.

Additional features and advantages of the present invention are described in, and will be apparent from, the detailed description of the presently preferred embodiments.

### DETAILED DESCRIPTION OF THE PRESENTLY PREFERRED EMBODIMENTS

All percentages herein are weight percentages unless otherwise specified. As used herein, the term "chewing gum" also includes bubble gum.

The present invention provides an aqueous syrup for use in chewing gum, a chewing gum formulation and a method for adding sorbitol to a product. Pursuant to the present invention, sorbitol is provided in a non-crystalline state at levels that the inventors believe were not heretofore commercially possible utilizing liquid sorbitol in chewing gum formulations.

Sorbitol is a sugarless sweetener that is added to a variety of products. These products include food stuffs, beverages, medicaments, confectioneries and chewing gum. Sorbitol can be added either alone, without other sugarless sweeteners, for example, in sugar-free chewing gum, or in combination with sugar sweeteners. Additionally, the sorbitol can be provided in, for example, the chewing gum entirely in the syrup form of the present invention or along with a crystalline form of sorbitol.

Pursuant to the present invention, the sorbitol is added to other components of a chewing gum formulation, as a blend of aqueous sorbitol, a plasticizing agent, and an anticrystallization agent. The blend of aqueous sorbitol is provided as a syrup. This blend can be used to reduce the usage of crystalline sorbitol in standard product formulations. It has been found that the resultant product, including the sorbitol composition of the present invention, exhibits increased binding capacity over currently used binders in sugarfree gum.

The syrup can comprise on a dry basis, 30% to 80% sorbitol, 15% to 56% of a plasticizing agent, and 3% to 30% of an anticrystallization agent. More preferably, the syrup comprises, on a dry basis, 40% to 70% sorbitol, 20% to 40% plasticizing agent and 5% to 20% anticrystallization agent. For some purposes, the syrup can comprise 60% to 80% sorbitol, 15% to 37% plasticizing agent and 3% to 25% anticrystallization agent. A presently preferred syrup contains about 56% sorbitol, about 38% plasticizing agent and about 6% anticrystallization agent.

Sorbitol for use in the inventive syrup will be provided in the form of an aqueous solution. The aqueous sorbitol solution will preferably contain at least 50% sorbitol, more preferably about 60% sorbitol, and most preferably about 70% sorbitol. Preferably the remainder of the solution is water. A commonly available sorbitol solution is Neosorb 70/02 from Roquette Corporation, which contains 70% sorbitol and about 30% water. It is believed that there are small amounts (0.75% to 1.5%) of mannitol in this typical sorbitol solution by way of an impurity, but the amount of mannitol normally present is insufficient to prevent crystallization when the sorbitol solution is evaporated with the plasticizing agent to low moisture levels. Roquette now also sells Neosorb 70/07M, which contains 5% added mannitol, for use in hard boiled candies. It is believed that syrups of the present invention, when mannitol is desired as the anticrystallization agent, could be made from adding a plasticizing agent to Neosorb 70/07M and evaporating the water.

The plasticizing agent of the syrup of the present invention is selected from glycerin, propylene glycol and mixtures thereof. While the plasticizing agent may help prevent crystallization, its main function is to keep the syrup, with high solids level, fluid at room temperature. The ratio of sorbitol to plasticizing agent in the syrup will preferably be between 6:1 and 1:2, more preferably between 4:1 and 1:1, and most preferably between 2:1 and 5:4.

The anticrystallization agent prevents the sorbitol from crystallizing as high solids levels are reached while evaporating water from the syrup. Because the syrup is preferably used in sugarless formulations, the anticrystallization agent is preferably an alditol other than sorbitol. (Sorbitol cannot be used because the sorbitol would not prevent crystallization of the sorbitol in the sorbitol solution.) The alditol should have a degree of polymerization (DP) of 1 or 2, because alditols with a DP of 3 or greater cause an increased viscosity in the syrup as it is evaporated. Also, such materials generally cost more than sorbitol and other alditols with a DP of 1 or 2, and therefore increase the cost of the syrup. The anticrystallization agents are selected from the group consisting of maltitol or a blend of maltitol and mannitol.

The ratio of sorbitol to anticrystallization agent in the syrup will preferably be between 12:1 and 3:2, more preferably between 10:1 and 3:1, most preferably between 9:1 and 6:1. Preferably over 50% of the combined alditols in the syrup will have a DP of 1, and most preferably the sorbitol comprises over 60% of the alditols.

On a dry basis, the syrup will comprise 50-85% alditols, of which 60% to 92% will be sorbitol and 8% to 40% will be alditols other than sorbitol with a DP of 1 or 2. The ratio of any alditols with a DP of 3 or greater to the alditols other than sorbitol and having a DP of 1 or 2 will preferably be less than 2:3, more preferably less than 1:2, and most preferably less than 1:3. The ratio of sorbitol to alditols other than sorbitol having a DP of 1 or 2 will preferably be between 10:1 and 2:1. Preferably less than about 4% of the alditols will have a DP of 3 or greater. Most preferably the syrup will consist essentially of sorbitol, a plasticizing agent selected from glycerin, propylene glycol and mixtures thereof, and an anticrystallization agent selected from maltitol, mannitol and mixtures thereof.

When the anticrystallization agent is maltitol, the syrup preferably includes, on a dry weight basis, 55% to 80% sorbitol, 17% to 40% glycerin and 3% to 10% maltitol. When the anticrystallization agent is mannitol, the syrup preferably includes, on a dry weight basis, 40% to about 70% sorbitol, 24% to 56% glycerin and 4% to 9% mannitol. In a preferred embodiment, the syrup includes, on a dry weight basis, 47% to 65% sorbitol; 28% to 45% glycerin, and 5% to 7% mannitol.

Prior to any evaporation of the syrup, the syrup will generally contain approximately 20% water. In some-products, the syrup can be used in this form. However, it is envisioned that at least some of the water will be driven off through evaporation or other means.

Generally, to make the aqueous sorbitol syrup of the present invention, aqueous sorbitol, a plasticizing agent and an anticrystallization agent are mixed together and then coevaporated to create a syrup. Preferably, the aqueous sorbitol, plasticizer agent and anticrystallization agent combination is evaporated so that it contains not more than 10% water. More preferably, the aqueous sorbitol, plasticizing agent and anticrystallization agent mixture is evaporated so that it contains no more than 7% water, even more preferably 0.5% to 5% water, and most preferably 1% to 3% water. Particularly preferred embodiments are evaporated to contain about 2% water.

In another embodiment, the syrup blend is made by hydrolyzing sucrose to dextrose and fructose. The dextrose and fructose are then hydrogenated to sorbitol and mannitol. The result will be a syrup containing sorbitol and mannitol. Glycerin can be added and the whole mixture can be coevaporated to drive off the water.

The aqueous sorbitol, plasticizing agent and anticrystallization agent can be provided in different combinations and ratios. Preferably, the syrup will be made from a mixture of 52% to 87% aqueous sorbitol solution, 10% to 45% plasticizing agent and 3% to 20% anticrystallization agent. More preferably, the syrup will be made from a mixture of 60% to 75% sorbitol solution, 20% to 35% plasticizing agent and 4% to 10% anticrystallization agent.

When the anticrystallization agent comprises maltitol, a presently preferred syrup is made with about 65% sorbitol solution (70% solids), about 30% glycerin and either 5% maltitol or 2.5% each of maltitol and mannitol.

The aqueous sorbitol syrup of the present invention will most frequently be the only syrup needed in the chewing gum formulation. However, in some formulations, other aqueous syrups or solutions may be desired. For example, it may be desirable to add HSH to the gum formulation in a low moisture form, such as the coevaporated glycerin and Lycasin brand HSH disclosed in U.S. Patent No. 4,671,961. Depending on the ratio of syrup used and the the desired moisture content, it may be possible to coevaporate the sorbitol solution and HSH solutions together. However, because Lycasin brand HSH has a high level of oligosaccharides with a DP of 3 or greater, it will not be as easy to evaporate the combined syrup to as low of a moisture level as the preferred sorbitol syrup. Also, in commercial applications, it is often desireable to keep ingredients stocked in their basic form so that they can easily be used in a wide variety of products. Thus, it is preferred to provide the sorbitol syrup separately from any HSH syrup used in the gum.

Pursuant to the present invention, the aqueous sorbitol syrup can be used to create sugarless chewing gums, because sugarless chewing gum typically contains sorbitol. However, it should be noted that the present invention can be used to create any chewing gum that includes sorbitol. Likewise, aqueous sorbitol syrup can be used in any product that uses sorbitol. Such products include confectioneries, medicaments, beverages and food products.

Chewing gum generally consists of a water insoluble gum base, a water soluble portion, and flavors. The water soluble portion dissipates with a portion of the flavor over a period of time during chewing. The gum base portion is retained in the mouth throughout the chew.

The insoluble gum base generally comprises elastomers, resins, fats and oils, softeners, and inorganic fillers. The gum base may or may not include wax. The insoluble gum base can constitute 5 to 95 percent, by weight, of the chewing gum. More commonly, the gum base comprises 10 to 50 percent of the gum, and, in some preferred embodiments, 20 to 35 percent, by weight, of the chewing gum.

In a preferred embodiment, the chewing gum base of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight; for styrene-butadiene, 1:1 to 1:3 bound styrene-butadiene; for polyvinyl acetate, 10,000 to 65,000 GPC weight average molecular weight, with the higher molecular weight polyvinyl acetates typically used in bubble gum base; and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters of partially hydrogenated rosin, glycerol esters of polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate,glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500.

In addition to a water insoluble gum base portion, a typical chewing gum composition includes a water soluble bulk portion and one or more flavoring agents. The syrup of the present invention, containing water soluble ingredients, forms part of the water soluble bulk portion. The water soluble portion can also include powdered bulking agents (most typically bulk sweeteners), high intensity sweeteners, flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum. Additionally, the sorbitol syrup of the present invention can be used as a softener and binding agent.

Bulk sweeteners include both sugar and sugarless components. Bulk sweeteners and other bulking agents typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, sucrose, dextrose, maltose, dextrin, dried invert sugar, fructose, levulose, galactose, corn syrup solids, and the like, alone or in combination.

Generally, the sorbitol syrup of the present invention comprises 5% to 50% of the chewing gum formulation. Typically the syrup will comprise 25% to 45% by weight of the chewing gum composition. Preferably the syrup will comprise at least 30% of the gum, more preferably more than 35% of the gum and most preferably more than 40% of the gum. When the syrup has a low moisture level, it may be preferable that the syrup comprises over 45% of the gum composition.

As noted above, in addition to the sorbitol syrup of the present invention, crystalline sorbitol, if desired, can also be used. Additionally, sugarless sweeteners can include, but are not limited to, other sugar alcohols such as mannitol, xylitol, hydrogenated starch hydrolysates and maltitol, alone or in combination.

High intensity artificial sweeteners can also be used in combination with the above. Preferred sweeteners include, sucralose, aspartame, salts of acesulfame, alitame, saccharin and its salts, cyclamic acid and its salts, glycyrrhizin, dihydrochalcones, thaumatin and monellin, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose, Raftilose, Raftilin, fructooligosaccharides (NutraFlora), palatinose oligosaccharide, guar gum hydrolysate (Sun Fiber), and indigestible dextrin (Fibersol). However, other low calorie bulking agents can be used.

A variety of flavoring agents can be used. The flavor can be used in amounts of 0.1 to 15 weight percent of the gum, and preferably, 0.2 to 5%. Flavoring agents may include essential oils, synthetic flavors or mixtures thereof including, oils derived from plants and fruits such as citrus oils, fruit essences, peppermint oil, spearmint oil, other mint oils, clove oil, oil of wintergreen and anise. Artificial flavoring agents and components may also be used. Natural and artificial flavoring agents may be combined in any sensorially acceptable fashion.

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

The sorbitol syrup of the present invention can be added next along with any other syrup softeners or bulking agents and part of the bulk portion. Further, parts of the bulk portion may then be added to the mixer. Flavoring agents are typically added with the final part of the bulk portion. The entire mixing process typically takes from 5 to 15 minutes, although longer mixing times are sometimes required. Those skilled in the art will recognize that variations of this general mixing procedure, or other mixing procedures, can be followed.

By way of example and not limitation, examples of chewing gum formulations constructed pursuant to the present invention are as follows:

**TABLE 1**

| | comparative Ex. 1 | comparative Ex. 2 | comparative Ex. 3 | comparative Ex.4 |
|---|---|---|---|---|
| Sugarless Syrup Blend* | 40 | 35 | 30 | 25 |
| Crystalline Sorbitol | 8.6 | 13.6 | 18.6 | 23.6 |
| Glycerin | 9.88 | 9.88 | 9.88 | 9.88 |
| Gum Base | 23.2 | 23.2 | 23.2 | 23.2 |
| Mannitol | 4.77 | 4.77 | 4.77 | 4.77 |
| Talc | 2.0 | 2.0 | 2.0 | 2.0 |
| Flavor | 1.65 | 1.65 | 1.65 | 1.65 |
| Encapsulated Aspartame | 0.34 | 0.34 | 0.34 | 0.34 |
| Spray Dried Peppermint Flavor | 0.25 | 0.25 | 0.25 | 0.25 |
| Coevaporated Lycasin/Glycerin** | 9.31 | 9.31 | 9.31 | 9.31 |

| | | | | |
|---|---|---|---|---|
| * created by evaporating a mixture of 65% sorbitol solution (70% sorbitol and 30% water), 30% glycerin and 5% mannitol to 98% solids. ** containing 67.5% hydrogenated starch hydrolysate solids, 25% glycerin and 7.5% moisture. | | | | |

Further examples of the present invention are set forth.

### EXAMPLES 5-9

A sorbitol mixture was created by placing a ratio of 65% aqueous sorbitol, 30% glycerin, and 5% mannitol in a suitable container. The mixture was evaporated to approximately 7% water. The syrup was then placed in formulas Ex. 5 - Ex. 9 set forth in Table 2 below (Ex. A is a comparative formula).

**TABLE 2**

| | Comp. Ex. A | comparative Ex. 5 | comparative Ex. 6 | comparative Ex. 7 | comparative Ex. 8 | comparative Ex. 9 |
|---|---|---|---|---|---|---|
| Crystalline Sorbitol | 49.17 | 27.56 | 32.56 | 35.56 | 36.65 | 41.79 |
| Gum Base | 23.2 | 23.2 | 23.2 | 23.2 | 23.2 | 23.2 |
| Sugarless Syrup Blend* | ---- | 45.0 | 40.0 | 35.0 | 30.0 | 25.0 |
| Coevaporated Lycasin/Glycerin** | 9.31 | ---- | ---- | ---- | ---- | ---- |
| Glycerin | 9.31 | ---- | ---- | ---- | 2.64 | 2.7 |
| Mannitol | 4.77 | ---- | ---- | 2.0 | 3.27 | 3.07 |
| Peppermint Flavor | 1.65 | 1.65 | 1.65 | 1.65 | 1.65 | 1.65 |
| Encapsulated Aspartame | 0.34 | 0.34 | 0.34 | 0.34 | 0.34 | 0.34 |
| Spray Dried Peppermint Flavor | 0.25 | 0.25 | 0.25 | 0.25 | 0.25 | 0.25 |
| Talc | 2.0 | 2.0 | 2.0 | 2.0 | 2.0 | 2.0 |

| | | | | | | |
|---|---|---|---|---|---|---|
| * Created by evaporating a mixture of 65% sorbitol solution (70% sorbitol and 30% water), 30% glycerin and 5% mannitol to 98% solids. ** Containing 67.5% hydrogenated starch hydrolysate solids, 25% glycerin and 7.5% moisture. | | | | | | |

A reduction of 55% crystalline sorbitol was achieved. In this regard, 45% of the necessary sorbitol is provided by the syrup and a satisfactory chewing gum is still achieved. Additionally, it was noted in chewing the gum formulas that used the sorbitol syrup (comparative Exs. 5-9) that an increase in binding capacity was achieved as compared to a current chewing gum binder Lycasin/glycerin (Comp. Ex. A).

The sugarless syrup containing liquid sorbitol, mannitol and glycerin described above has been found to be a suitable replacement for most of the crystalline sorbitol and as a way to increase the binding capacity over currently used binders in sugarless gum. However, it has been found that the use of maltitol in the syrup provides an improvement of the sugarless syrup containing mannitol. By replacing the mannitol with maltitol in the coevaporated syrup, there is improvement in the texture, and flavor properties of the sugarless gum.

One improved sugarless syrup blend was made by evaporating a mixture of 75% aqueous sorbitol solution (containing 70% sorbitol and 30% water), 20% glycerin and 5% maltitol to 98% solids. The mixture was placed into a vacuum cooker set at 93°C (200°F) under a pressure of 12.7cm (5 inches) of mercury). The evaporation can also take place in a steam kettle.

Once the mixture has been evaporated to the optimum solids level, it can be put into chewing gum. The sugarless syrup has many properties similar to those of corn syrup, however, the sugarless syrup has a smoother texture.

This mixture, when placed in gum at the optional level, will cause the gum to have a more intense flavor release and higher sweetness. The flavor becomes cleaner and stronger and is not masked by the addition of the sugarless syrup. Chewing gum formulations containing this improved sugarless blend are shown in Examples 10-11, along with Comparative Example B, in Table 3.

**TABLE 3**

| | Comp. Ex. B | Ex. 10 | Ex. 11 |
|---|---|---|---|
| Improved Sugarless Syrup Blend (sorbitol/glycerin/maltitol) | ------ | 40.000 | 44.000 |
| Crystalline Sorbitol | 64.605 | 24.605 | 24.605 |
| Glycerine | 4.000 | 4.000 | ----- |
| Gum Base | 26.420 | 26.420 | 26.420 |
| Mannitol | 3.000 | 3.000 | 3.000 |
| Lecithin | 0.130 | 0.130 | 0.130 |
| Flavor | 1.630 | 1.630 | 1.630 |
| Encapsulated Aspartame | 0.215 | 0.215 | 0.215 |

Lab scale sensory results with this blend of sorbitol, glycerin and maltitol show that the overall flavor quality improves and there is an enhancement of the existing sweetness level.

As previously noted, the sorbitol syrup can be used to create other products aside from chewing gum. By way of example, and not limitation, such other products may have the following formulas.

### EXAMPLES 12-17

A sorbitol syrup containing a plasticizing agent and an anticrystallization agent and only 2% water (hereinafter "98% sorbitol syrup") such as used in any of Examples 1-11, may be used in a sugarless, non-cariogenic hard candy as shown in the following formulas:

### Example 12

| Fruit Flavored hard candy: | |
|---|---|
| | % |
| Xylitol | 15.8 |
| Sorbitol | 34.8 |
| 98% Sorbitol Syrup | 38.0 |
| Water | 11.0 |
| Citric Acid | 0.3 |
| Artificial Sweetener/Fruit Flavor/Color | as needed |

### Example 13

| Butterscotch Hard Candy: | |
|---|---|
| | % |
| 98% Sorbitol Syrup | 53.6 |
| Sorbitol | 26.4 |
| Water | 17.66 |
| Butter | 2.06 |
| Salt | 0.12 |
| Natural and Artificial Flavor | 0.16 |

### Example 14

| Hard Candy: | |
|---|---|
| | % |
| Sorbitol | 30.0 |
| 98% Sorbitol Syrup | 60.0 |
| Xylitol | 9.35 |
| Aspartame | 0.35 |
| Salt | 0.12 |
| Citric Acid/Flavor/Color | as needed |

### Procedure: Hard candies can be made by the following procedure:

1. In a stainless steel, steam jacketed kettle, the 98% sorbitol syrup, xylitol, water, sorbitol, and salt are added and the mixture is heated to form a thick syrup.
2. The syrup is cooked and mixed until a temperature of about 149°C (300°F) and a moisture level of 1-2% is obtained.
3. The heavy syrup is poured onto a stainless steel cooling table.
4. Citric acid, artificial ingredients, flavors and color, and butter are added and mixed by kneading.
5. The resultant product is allowed to cool to room temperature and cut as needed.

### Example 15 (sugarless taffy)

98% sorbitol syrup may be used to prepare a sugar-free taffy by the following formula and procedure:

| Formula: | | | |
|---|---|---|---|
| | % As Is | % DSB | 20# (9.072Kg) Batch |
| 98% Sorbitol Syrup | 94.5 | 92.7 | 18.9 (8.573 Kg) |
| 110°F, M.P. Vegetable Oil | 5.25 | 7.0 | 1.0 (0.476 Kg) |
| Lecithin | 0.25 | 0.3 | 0.3 (0.136 Kg) |
| Flavor/Color/Acid/Sweetener | As needed | | |

### Procedure:

1. Weigh 98% sorbitol syrup into an atmospheric cooker, such as a Savage open fire cooker, and cook to about 255°F (123.9°C). No agitation is required for this step.
2. Allow the cooked 98% sorbitol syrup to cool to about 230°F and add fat and lecithin; fat does not have to be premelted. Mix until uniform.
3. Pour mass on oiled cooling table. Side bars may be necessary for initial cooling if table is small
4. Work in color, flavor and acid on the slab before pulling (color and flavor may also be added on puller). Cool to plastic texture.
5. Pull cooked mass until desired texture is attained. Cut and wrap in moisture resistant packaging.

### Example 16 (sugar-free caramel)

98% sorbitol syrup may be used to prepare a sugar-free caramel by the following formula and procedure:

| | |
|---|---|
| 98% Sorbitol Syrup | 58.53% |
| Evaporated milk | 33.24 |
| Coconut Oil, 92°F (33°C) | 7.68 |
| Lecithin | 0.20 |
| Salt | 0.20 |
| Aspartame | 0.11 |
| Vanillin | 0.04 |
| Total | 100.00% |

### Procedure:

1. Prepare aspartame slurry by mixing 1/3 ratio of aspartame to coconut oil in a high shear blender for about 30 seconds.
2. Premix all ingredients, except aspartame slurry, half of the evaporated milk and the vanillin, for 5 minutes at about 120°F (48.9°C).
3. Bring premix to a boil and slowly add the balance of the evaporated milk, maintaining the boil.
4. Cook to the desired texture. Final cook temperature will vary according to the cooking process. A suggested final cook temperature is about 245°F (118.3°C).
5. Cool the caramel to about 220°F (104°C) and add the aspartame slurry slowly with mixing. The vanillin should also be added at this time.
6. Slab, cut and wrap as desired.

### Example 17 (sugarless gum drops)

| | % |
|---|---|
| Gelatin 200 bloom type B | 7.0 |
| Crystalline sorbitol | 34.9 |
| 98% Sorbitol Syrup | 32.6 |
| Hot Water (80-90°C) | 14.0 |
| Water | 10.0 |
| Citric Acid Solution | 1.5 |
| Fruit Flavor/Color | as needed |

### Procedure:

1. Dissolve gelatin directly in hot water.
2. Cook the 98% sorbitol syrup, sorbitol and water at 115°C, and add gelatin solution.
3. Stir slowly in order to obtain a smooth homogenous mixture.
4. Remove air bubbles with deaeration equipment or other available means.
5. Add citric acid solution, flavor and color.
6. Deposit in cool and dry starch, and sprinkle a little starch onto the articles.
   Temperature: 70°C. Total solids when depositing: 78°C Brix.
7. Store the starch tray at room temperature for 24 hours.

## Claims

1. An aqueous syrup for use in chewing gum comprising, on a dry basis:
a) 50% to 85% alditols, of which
i) 60% to 92% are sorbitol, and
ii) 8% to 40% are anticrystallization agents comprising alditols other than sorbitol with a degree of polymerization (DP) of 1 or 2 selected from the group consisting of maltitol or a blend of maltitol and mannitol; and
iii) any alditols present with a DP of 3 or greater are present at a ratio to said alditols other than sorbitol with a DP of 1 or 2 of less than 2:3; and
b) 15% to 50% plasticizing agent selected from glycerin, propylene glycol and mixtures thereof.

2. The syrup of claim 1 which has a moisture content of 0.5% to 5%.

3. The syrup of claim 2 wherein the syrup comprises about 2% moisture.

4. The syrup of any one of the preceding claims wherein the ratio of sorbitol to said alditols other than sorbitol with a DP of 1 or 2 is between 10:1 and 2:1.

5. The syrup of any one of the preceding claims wherein the platicizing agent is glycerin.

6. The syrup of any one of the preceding claims which comprises, on a dry basis; 55% to 80% sorbitol, 17% to 40% glycerin and 3% to 10% maltitol.

7. The syrup of any one of the preceding claims wherein less than 4% of the alditols have a DP of 3 or greater.

8. The syrup of claim 6 wherein the syrup comprises, on a dry basis, about 56% sorbitol, about 38% glycerin and about 6% maltitol.

9. The syrup of any one of the preceding claims wherein the syrup is evaporated from a mixture comprising:
a) 52% to 87% of an aqueous solution containing at least 50% sorbitol,
b) 10% to 45% glycerin, and
c) 3% to 20% anticrystallization agent selected from maltitol or a blend of maltitol and mannitol.

10. A method for adding sorbitol to a product including other components comprising the steps of:
a) creating a solution that consists essentially of:
i) 55 to 75% by weight aqueous sorbitol,
ii) 25 to 45% by weight of a plasticizing agent selected from the group consisting of glycerin, propylene glycol and mixtures thereof, and
iii) 3 to 7% by weight of an anticrystallization agent selected from the group consisting of maltitol or a blend of maltitol and mannitol;
b) coevaporating the solution into a syrup; and
c) adding the syrup to the other components.

11. The method of claim 10 wherein the syrup constitutes over 30% of the chewing gum composition.

## Patentansprüche

1. Wässriger Sirup zur Verwendung in Kaugummi, umfassend, bezogen auf die Trockenmasse:
a) 50 % bis 85 % Alditole, von denen
i) 60 % bis 92 % Sorbitol sind, und
ii) 8 % bis 40 % Kristallisationsverhinderer sind, die von Sorbitol verschiedene Alditole mit einem Polymerisationsgrad (DP) von 1 oder 2, ausgewählt aus der Gruppe bestehend aus Maltitol oder einer Mischung von Maltitol und Mannitol, umfassen; und
iii) jegliche vorhandene Alditole mit einem DP von 3 oder mehr in einem Verhältnis zu den von Sorbitol verschiedenen Alditolen mit einem DP von 1 oder 2 von weniger als 2:3 vorhanden sind; und
b) 15 % bis 50 % Plastifizierungsmittel, ausgewählt aus Glycerin, Propylenglycol und Gemischen davon.

2. Sirup nach Anspruch 1, welcher einen Feuchtigkeitsgehalt von 0,5 % bis 5 % aufweist.

3. Sirup nach Anspruch 2, wobei der Sirup ungefähr 2 % Feuchtigkeit umfasst.

4. Sirup nach einem der vorangehenden Ansprüche, wobei das Verhältnis von Sorbitol zu den von Sorbitol verschiedenen Alditolen mit einem DP von 1 oder 2 zwischen 10:1 und 2:1 liegt.

5. Sirup nach einem der vorangehenden Ansprüche, wobei das Plastifizierungsmittel Glycerin ist.

6. Sirup nach einem der vorangehenden Ansprüche, welcher, bezogen auf die Trockenmasse, umfasst: 55 % bis 80 % Sorbitol, 17 % bis 40 % Glycerin und 3 % bis 10 % Maltitol.

7. Sirup nach einem der vorangehenden Ansprüche, wobei weniger als 4 % der Alditole einen DP von 3 oder mehr aufweisen.

8. Sirup nach Anspruch 6, wobei der Sirup, bezogen auf die Trockenmasse, ungefähr 56 % Sorbitol, ungefähr 38 % Glycerin und ungefähr 6 % Maltitol umfasst.

9. Sirup nach einem der vorangehenden Ansprüche, wobei der Sirup aus einem Gemisch eingedampft wird, umfassend:
a) 52 % bis 87 % einer wässrigen Lösung, die mindestens 50 % Sorbitol enthält,
b) 10 % bis 45 % Glycerin, und
c) 3 % bis 20 % Kristallisationsverhinderer, ausgewählt aus Maltitol oder einer Mischung von Maltitol und Mannitol.

10. Verfahren zum Zugeben von Sorbitol zu einem Produkt, das weitere Komponenten enthält, umfassend die Schritte:
a) Erzeugen einer Lösung, die im Wesentlichen besteht aus:
(i) 55 bis 75 Gew.-% wässriges Sorbitol,
(ii) 25 bis 45 Gew.-% eines Plastifizierungsmittels, ausgewählt aus der Gruppe bestehend aus Glycerin, Propylenglycol und Gemischen davon, und
(iii) 3 bis 7 Gew.-% eines Kristallisationsverhinderers, ausgewählt aus der Gruppe bestehend aus Maltitol oder einer Mischung von Maltitol und Mannitol;
b) Koevaporieren der Lösung zu einem Sirup; und
c) Zugeben des Sirups zu den weiteren Komponenten.

11. Verfahren nach Anspruch 10, wobei der Sirup über 30 % der Kaugummizusammensetzung ausmacht.

## Revendications

1. Sirop aqueux destiné à être utilisé dans une gomme à mâcher, comprenant, sur base sèche :
a) 50 % à 85 % d'alditols, dont
i) 60 % à 92 % consistent en sorbitol, et
ii) 8 % à 40 % consistent en agents anti-cristallisation comprenant des alditols autres que le sorbitol, ayant un degré de polymérisation (DP) égal à 1 ou 2, choisis dans le groupe consistant en maltitol ou un mélange de maltitol et de mannitol ; et
iii) n'importe quels alditols présents ayant un DP égal ou supérieur à 3 sont présents en un rapport de ceux-ci auxdits alditols autres que le sorbitol ayant un DP égal à 1 ou 2 inférieur à 2:3 ; et
b) 15 % à 50 % d'un agent plastifiant choisi entre le glycérol, le propylèneglycol et leurs mélanges.

2. Sirop suivant la revendication 1, qui a une teneur en humidité comprise dans l'intervalle de 0,5 % à 5 %.

3. Sirop suivant la revendication 2, qui comprend environ 2 % d'humidité.

4. Sirop suivant l'une quelconque des revendications précédentes, dans lequel le rapport du sorbitol auxdits alditols autres que le sorbitol ayant un DP égal à 1 ou 2 est compris entre 10:1 et 2:1.

5. Sirop suivant l'une quelconque des revendications précédentes, dans lequel l'agent plastifiant est le glycérol.

6. Sirop suivant l'une quelconque des revendications précédentes, qui comprend, sur base sèche : 55 % à 80 % de sorbitol, 17 % à 40 % de glycérol et 3 % à 10 % de maltitol.

7. Sirop suivant l'une quelconque des revendications précédentes, dans lequel une quantité inférieure à 4 % des alditols a un DP égal ou supérieur à 3.

8. Sirop suivant la revendication 6, qui comprend, sur base sèche, environ 56 % de sorbitol, environ 38 % de glycérol et environ 6 % de maltitol.

9. Sirop suivant l'une quelconque des revendications précédentes, qui est produit par évaporation à partir d'un mélange comprenant :
a) 52 % à 87 % d'une solution aqueuse contenant au moins 50 % de sorbitol,
b) 10 % à 45 % de glycérol, et
c) 3 % à 20 % d'un agent anti-cristallisation choisi entre le maltitol ou un mélange de maltitol et de mannitol.

10. Procédé pour ajouter du sorbitol à un produit comprenant d'autres constituants, comprenant les étapes :
a) de formation d'une solution qui consiste essentiellement en :
i) 55 % à 75 % en poids de sorbitol aqueux,
ii) 25 % à 45 % en poids d'un agent plastifiant choisi dans le groupe consistant en le glycérol, le propylèneglycol et leurs mélanges, et
iii) 3 % à 7 % en poids d'un agent anti-cristallisation choisi dans le groupe consistant en le maltitol ou un mélange de maltitol et de mannitol ;
b) de co-évaporation de la solution en un sirop ; et
c) d'addition du sirop aux autres constituants.

11. Procédé suivant la revendication 10, dans lequel le sirop représente plus de 30 % de la composition de gomme à mâcher.
